# EUROPÄISCHE PATENTANMELDUNG

(11) **EP 0 798 625 A2**
(43) Veröffentlichungstag der Anmeldung: **01.10.1997**
(21) Anmeldenummer: 97105151.1
(22) Anmeldetag: 26.03.1997
(51) Int. Cl.: G06F 1/30

(54) **Verfahren zum Betrieb eines Mikrocontrollers mit inkorporiertem Sleep-Modus bei verminderter Betriebsspannung sowie Anordnung zur Durchführung des Verfahrens und Verwendung des Verfahrens und/oder der Anordnung**

(30) Priorität: 29.03.1996 DE 19612696
(71) Anmelder: SIEMENS AKTIENGESELLSCHAFT, 80333 München (DE)
(72) Erfinder: Puchta, Ralf, Dipl.-Ing. (FH), 93053 Regensburg (DE)

(57) **Zusammenfassung**

Zum kostengünstigen, definierten Überbrücken eines kurzen Ausfalls bzw. eines Einbruchs der Betriebsspannung (Uein) werden nach Erkennen einer fallenden Flanke sämtliche leistungsintensiven Verbraucher vom Mikrocontroller (MC) getrennt und nur dessen relevanten Speicherdaten bei entsprechend reduzierter Ersatz-Betriebsspanungssversorgung im "Sleep-Modus" gehalten; durch Erkennen einer steigenden Flanke der Betriebsspannung wird der Mikrocontroller (MC) aus dem "Sleep-Modus" aufgeweckt und in den Normalbetrieb zurückgesetzt.

## Beschreibung

Die Erfindung bezieht sich auf ein Verfahren zum Betrieb eines Mikrocontrollers mit inkorporiertem "Sleep-Modus" bei verminderter Betriebsspannung gemäß Patentanspruch 1 sowie eine Anordnung zur Durchführung des Verfahrens gemäß Patentanspruch 2 und eine Verwendung des Verfahrens und/oder der Anordnung gemäß den Patentansprüchen 3-5.

In Haushaltsgeräten, wie z.B. Waschmaschinen und Herden, der Komfortklasse werden zunehmend elektronische Steuerungen eingesetzt, die zumindest einen Mikrocontroller enthalten. Über derartige Mikrocontroller werden z.B. gespeicherte Programme betrieben jedoch auch Temperatur-Einstellungen und Signalanzeigen angesteuert. Um bei, insbesondere kurzzeitigen, Spannungseinbrüchen in der den Mikrocontroller versorgenden Betriebsspannung einen kompletten Datenverlust und damit eine Neuprogrammierung vermeiden zu können, wird in z.B. durch die EP 0 563 924 A1, Figur 3 an sich bekannter Art eine Ersatz-Betriebsspannungsversorgung durch einen der speisenden Betriebsspannung parallelgeschalteten Kondensator vorgesehen. Dieser Kondensator muß dann so groß bemessen sein, daß er in dem den Spannungseinbruch überbrückenden Zeitraum die notwendige Energie für den weiterhin voll arbeitenden und schaltenden Mikrocontroller liefern kann.

Durch "Design & Elektronik", Ausgabe 8 vom 12.04.1988, Seiten 78-83, insbesondere Bild 4 ist eine Überwachungsschaltung für Mikroprozessorsysteme bekannt, bei der bei Unterschreiten einer Mindest-Betriebsspannung der Ausgang eines Spannungsdetektors auf niedriges Potential geht und den Mikroprozessor über einen nicht umschaltbaren Interrupt-Eingangspin (NMI) unterbricht. Die System-Software speichert dann sämtliche zu rettenden Daten in ein CMOS-RAM und geht in eine Überwachungs-Schleife für den nicht umschaltbaren Interrupt-Eingangspin über. Liegt der Mindestwert der Betriebsspannung wieder an, läuft die Sequenz in umgekehrter Reihenfolge ab.

Durch die DE 44 13 674 A1 ist außerdem ein Stromversorgungs-Steuersystem für tragbare Datenverarbeitungsgeräte bekannt, das u.a. aufgrund eines dauernden Spannungsvergleichs bei Abfall der Hauptbatteriespannung unter einen Referenzwert die jeweils momentan vorliegende Betriebsart auf eine Betriebsart mit niedrigerem Energieverbrauch zurücksetzt.

Gemäß Aufgabe vorliegender Erfindung soll der Aufwand zum definierten Überbrücken eines Spannungseinbruchs in der Betriebsspannung bei reduziertem Leistungsbedarf des Mikrocontrollers mit einfachen Mitteln gemindert werden.

Die Lösung dieser Aufgabe gelingt erfindungsgemäß durch ein Verfahren gemäß Patentanspruch 1 bzw. eine Anordnung zur Durchführung des Verfahrens gemäß Patentanspruch 2 bzw. durch eine Verwendung des Verfahrens und/oder der Anordnung gemäß den Patentansprüchen 3-5.

Bei dem erfindungsgemäßen Verfahren wird der in der Regel an sich in einen Mikrocontroller inkorporierte "Sleep-Modus" dazu mitbenutzt, um während der Überbrückungszeit, d.h. nach einer Unterspannungserkennung, leistungsintensive Verbraucher abzuschalten, jedoch bei entsprechend geringerem Energieverbrauch und dementsprechend in vorteilhafter Weise kleiner zu bemessender Ersatz-Betriebsspannungsversorgung die relevanten Speicherdaten im Mikrocontroller erhalten zu können. Durch die erfindungsgemäße Erkennung einer Spannungswiederkehr kann der Mikrocontroller dann unmittelbar wieder in seinen Normalzustand zurückgesetzt werden; dadurch daß dabei der Mikrocontroller nach dem Setzen in den "Sleep-Modus" aufgrund der einen Flanke in vorteilhafter Weise auf die andere Flankenerkennung umgeschaltet ist, bedarf es zum Rücksetzen aus dem "Sleep-Modus" nur des externen Steuersignals mit der anderen Flanke; dadurch erübrigt sich ein Zwischenbetrieb mit einer leistungsverbrauchenden Überwachungs-Schleife.

Die Erfindung wird im folgenden anhand eines schematischen Ausführungsbeispiels in der Zeichnung näher erläutert; darin zeigen:
- FIG 1: das grundsätzliche Blockschaltbild einer, z.B. für eine elektronische Backofensteuerung eines Herdes vorgesehenen, Spannungsversorgung für einen Mikrocontroller;
- FIG 2: die Spannungsverläufe am Eingang des Mikrocontrollers;
- FIG 3: ein Signalflußdiagramm zur Erläuterung des erfindungsgemäßen Verfahrens.

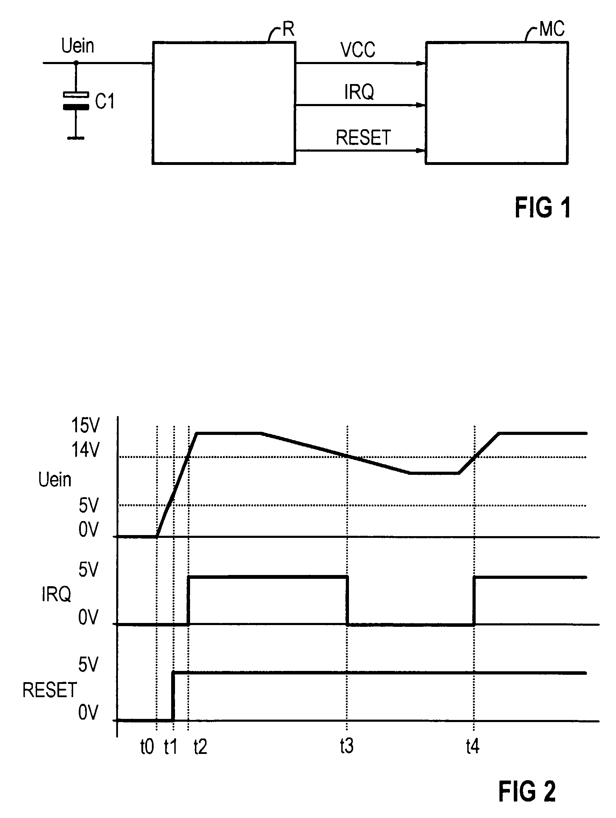

FIG 1 zeigt das Blockschaltbild eines über einen Spannungsregler R aus einer Betriebsspannung Uein gespeisten Mikrocontrollers MC. Der Mikrocontroller MC weist zumindest einen Eingangspin VCC für die Betriebsspannung, einen Interrupt-Eingangspin für ein externes Steuersignal IRQ und einen Eingangspin für ein Reset-Signal zum Ein- bzw. Ausschalten des Mikrocontrollers MC auf. In dem Spannungsregler R wird die Betriebsspannung Uein von ca. 15 Volt auf ca. 5 Volt reduziert. Parallel zu der Betriebsspannung Uein liegt ein Speise-Kondensator C1, der als Ersatz-Betriebsspannungsversorgung bei kurzzeitiger Unterbrechung bzw. Einbruch der Betriebsspannung Uein einsetzbar ist.

FIG 2 zeigt die zeitlichen Verläufe der am Eingang des Spannungsreglers R liegenden Betriebsspannung Uein, der am Interrupt-Eingangspin des Mikrocontrollers MC anliegenden Signalspannung sowie der am Reset-Eingangspin des Mikrocontrollers MC anliegenden Signalspannung. Im Zeitpunkt t0 setzt die Betriebsspannung Uein ein und steigt auf ihren Endwert von hier angenommenen 15 Volt. Im Zeitpunkt t1 ist eine für den Mikrocontroller MC notwendige Mindestspannung von hier angenommenen ca. 4,75 Volt und somit das Ende der Reset-Zeit des Mikrocontrollers MC gegeben; das Reset-Signal ist dementsprechend auf "High" gesetzt. Im Zeitpunkt t2 ist ein notwendiger Mindestwert von hier angenommenen ca. 14 Volt der Betriebsspannung und somit die Mindestspannung für einen voll arbeitenden Schaltbetrieb über den Mikrocontroller MC vorhanden; die Flankenerkennung am Interrupt-Eingangspin des Mikrocontrollers MC wird nunmehr auf "Fallende Flanke" gesetzt. Im Zeitraum zwischen t2 und t3 beginnt ein Spannungseinbruch, wodurch am Ausgang des Spannungsreglers R im Zeitpunkt t3 eine fallende Flanke anliegt. Dieser Spannungseinbruch wird aufgrund des am Interrupt-Eingangspin des Mikrocontrollers MC anliegenden Steuersignals mit fallender Flanke erkannt; dementsprechend wird dieser in den "Sleep-Modus" gesetzt und leistungsintensive Stromverbraucher werden vom Mikrocontroller MC abgeschaltet; gleichzeitig wird die Flankenerkennung am Interrupt-Eingangspin des Mikrocontrollers MC auf "Steigende Flanke" gesetzt. Im Zeitpunkt t4 erzeugt der Spannungsregler R am Interrupt-Eingangspin ein Steuersignal mit einer steigenden Flanke; aufgrund des wieder Vorhandensein der normalen Betriebsspannung Uein wird der Mikrocontroller MC aus dem "Sleep-Modus" aufgeweckt und die Flankenerkennung am Interrupt-Eingangspin des Mikrocontrollers MC wird wieder auf "Fallende Flanke" rückgesetzt.

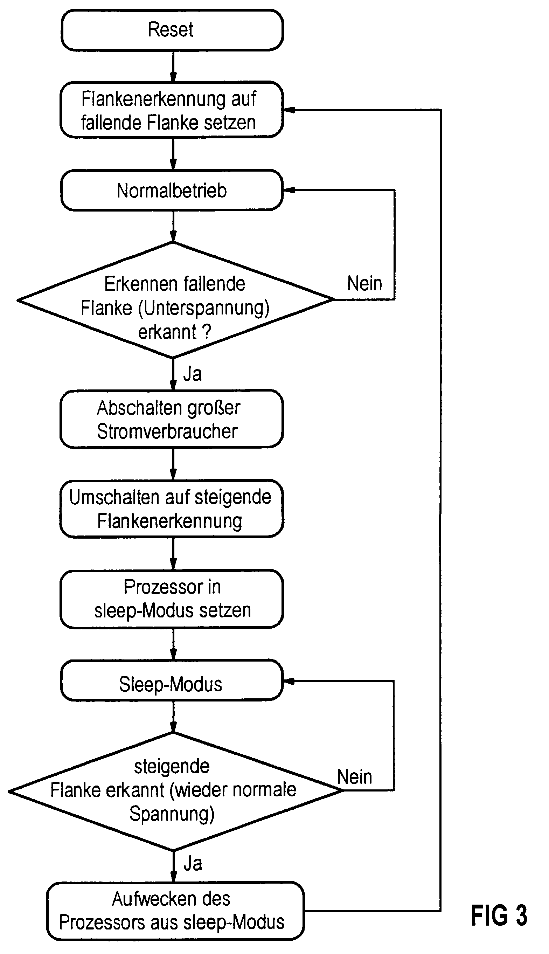

Die einzelnen Verfahrensschritte sind anhand FIG 3 nochmals in einem Signalflußdiagramm erläutert, das Gegenstand der erfindungswesentlichen Beschreibung ist.

## Patentansprüche

1. Verfahren zum Betrieb eines Microcontrollers (MC) mit inkorporiertem "Sleep-Modus" bei verminderter Betriebsspannung (Uein) mit folgenden Schritten:
a) Bei Erreichen bzw. Überschreiten (t2) eines ersten Mindestwertes einer steigenden Betriebsspannung (Uein) wird durch ein externes Steuersignal (IRQ) mit steigender Flanke ein umschaltbarer Interrupt-Eingangspin des Microkontrollers (MC) auf eine fallende Flankenerkennung des Steuersignals gesetzt;
b) bei Unterschreiten (t3) eines zweiten Mindestwertes einer fallenden Betriebsspannung (Uein) werden durch ein externes Steuersignal (IRQ) mit fallender Flanke der Interrupt-Eingangspin des Mikrocontrollers (MC) auf eine steigende Flankenerkennung des Steuersignals und der Mikrocontroller (MC) in den "Sleep-Modus" gesetzt;
c) bei Wiedererreichen (t4) bzw. Überschreiten des ersten Mindestwertes einer wieder steigenden Betriebsspannung (Uein) werden der Interrupt-Eingangspin des Mikrocontrollers (MC) auf eine fallende Flankenerkennung des Steuersignals und der Mikrocontroller (MC) aus dem "Sleep-Modus" in den Normalbetrieb zurückgesetzt.

2. Anordnung zur Durchführung des Verfahrens mit einer Ersatz-Betriebsspannungsversorgung, insbesondere mit einem Speise-Kondensator (C1), nach dem vorhergehenden Anspruch mit dem Merkmal:
d) Die Ersatz-Betriebsspannungsversorgung, insbesondere der Speise-Kondensator (C1), ist entsprechend dem Leistungsbedarf des Mikrocontrollers (MC) im "Sleep-Modus"-Betrieb ausgelegt.

3. Verwendung des Verfahrens und/oder der Anordnung nach zumindest einem der vorhergehenden Ansprüche für die elektronische Steuerung eines Haushaltsgeräts.

4. Verwendung des Verfahrens und/oder der Anordnung nach dem vorhergehenden Anspruch für die elektronische Steuerung eines Herdes.

5. Verwendung des Verfahrens und/oder Anordnung nach dem vorhergehenden Anspruch 3 für die elektronische Steuerung eines Backofens.
